(19) Europäisches Patentamt
European Patent Office
Office européen des brevets

(11) **EP 2 597 436 A1**

(12) **EUROPEAN PATENT APPLICATION**

(43) Date of publication:
**29.05.2013 Bulletin 2013/22**

(51) Int Cl.:
*G01F 25/00* (2006.01)          *G01D 18/00* (2006.01)
*G01L 27/00* (2006.01)          *G01K 15/00* (2006.01)

(21) Application number: **11190393.6**

(22) Date of filing: **23.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Endress + Hauser Messtechnik GmbH+Co. KG**
**79576 Weil am Rhein (DE)**

(72) Inventor: **Vaissiere, Dimitri**
**68130 Wittersdorf (FR)**

(74) Representative: **Andres, Angelika Maria**
**Endress+Hauser (Deutschland) AG+Co. KG**
**PatServe**
**Colmarer Strasse 6**
**79576 Weil am Rhein (DE)**

(54) **Method of determining a calibration time interval for a measurement device**

(57)    A profound method of determining a calibration time interval (TI) for a specific measurement device of a given type to be used in a specific application, after which the specific device shall be calibrated, which is suitable in terms of costs and safety, is described, comprising the steps of: operating and regularly calibrating a statistically relevant number of devices of the given type, during each calibration of each of theses devices determining whether the device under calibration is compliant or non-compliant to a given specification, adjusting non-compliant devices in order to make them compliant again, and replacing them in case they are non-compliant after their adjustment, for each of these devices recording all operation time intervals ($TBA_i$) during which the respective device was operated unaltered prior to any of its adjustments or its replacement, based on the recorded operation time intervals ($TBA_i$) determining a probability density function (PDF(TBA)) for an operation time interval (TBA) after which devices of this type will require adjustment or replacement, determining a criticality (C) of the specific device representing a risk involved in operating the device in the specific application, and determining the calibration time interval (TI) as a time interval (TBA($\alpha_c$)) for which according to the probability density function (PDF(TBA)) a probability (P) for a device of this type to require adjustment or replacement during this time interval (TBA($\alpha_c$)) corresponds to a predetermined probability value (P($\alpha_c$)) assigned to the criticality (C) of the specific device.

**Fig. 1**

**Description**

The present invention concerns a method of determining a calibration time interval for a measurement device of a given type to be used in a specific application.

Measurement devices are used in nearly all branches of industry for measuring quantities, in particular physical quantities related to ongoing production processes. Measurement results indicating the measured value of the quantity are for example commonly used in process automation for monitoring, controlling and/or regulating an industrial process, in particular a production process. Thus measurement devices play a vital part in industrial processes, and a defect of a device may have severe consequences.

In order to ensure, that measurement devices fulfill certain measurement properties specified for them, in particular a specified measurement accuracy, and/or comply to certain standards, they are regularly calibrated.

Calibration is commonly used to check compliance of a device to a given specification. During calibration the measurement device performs at least one measurement task according to a given operating procedure, during which at least one given value of the quantity to be measured by the device is provided by a corresponding reference or standard. Based on the measurement results obtained by the device with respect to the given value of the quantity to be measured, a measurement error of the device is determined. In case the measurement error exceeds a predetermined maximal permissible error, the device is considered non-compliant. As a consequence, adjustment of the measurement device is required, which can then be performed based on the data obtained during the calibration procedure. This includes for example adjustments of offset, gain and/or span of the measurement indication. If the measurement errors do not exceed the maximum permissible error compliance of the device is declared and the device is put back into operation.

Calibrations are usually performed periodically after fixed calibration time intervals recommended by the manufacturer of the device. This recommended calibration time interval is generally applied to all devices of the respective type, regardless of the application the device will be used in. Quite often the recommended calibration time interval is estimated based on technical properties of the device and experiences of the manufacturer of the device.

Since the same fixed calibration time interval is usually applied throughout the entire life time of a device, the rate of non-compliant devices will in most cases increase corresponding to the age and/or the operating hours of the devices.

Thus in most cases an initial calibration time interval, after which a new device is calibrated for the first time, is much shorter than necessary, causing unnecessary high calibration costs. On the other hand, there are applications where longer initial calibration time intervals should not be applied for safety reasons.

Thus there is a need for a profound and documented means to determine suitable calibration time intervals for devices, which can be applied safely and cost-effective.

It is an object of the invention to provide a profound method of determining a calibration time interval for a specific measurement device of a given type to be used in a specific application which is suitable in terms of costs and safety.

To this extent, the invention comprises a method of determining a calibration time interval for a specific measurement device of a given type to be used in a specific application, after which the specific device shall be calibrated, comprising the steps of:

- operating and regularly calibrating a statistically relevant number of devices of the given type,
- during each calibration of each of theses devices determining whether the device under calibration is compliant or non-compliant to a given specification,
- adjusting non-compliant devices in order to make them compliant again, and replacing them in case they are non-compliant after their adjustment,
- for each of these devices recording all operation time intervals during which the respective device was operated unaltered prior to any of its adjustments or its replacement,
- based on the recorded operation time intervals determining a probability density function for an operation time interval after which devices of this type will require adjustment or replacement,
- determining a criticality of the specific device representing a risk involved in operating the specific device in the specific application, and
- determining the calibration time interval as a time interval for which according to the probability density function a probability for a device of this type to require adjustment or replacement during this time interval corresponds to a predetermined probability value assigned to the criticality of the specific device.

According to a refinement of the invention, devices of the same type are devices of the same built belonging to a predefined age group, in particular new devices, medium age devices or old devices.

According to an additional or alternative refinement, devices of the same type are devices of the same built operated under exposure to predefined environment conditions prevailing at the specific application, in particular under exposure to high and/or varying temperatures, under exposure to high and/or varying pressures, under exposure to aggressive and/or abrasive media, and/or under exposure to vibrations. According to a preferred embodiment, the probability values assigned to the criticalities decrease with increasing criticality.

According to a further refinement, a fixed number of predefined probability values is assigned to a corresponding number of criticality ranges.

According to a preferred embodiment, all probability values assigned to the criticalities are smaller than or equal to a given probability limit, in particular smaller or equal to 50%.

According to a refinement of the last mentioned embodiment, all probability values assigned to criticalities smaller than a predetermined criticality limit are equal to the probability limit.

The method according to the invention further comprises an embodiment, wherein

- a first criticality range is defined comprising all criticalities lower than a predetermined criticality limit, and
- a second criticality range is defined comprising all criticalities exceeding the criticality limit,
- a single probability value is assigned to all criticalities within the first criticality range, and
- a range of probability values is assigned to the criticalities contained in the second criticality range, which decrease with increasing criticality.

According to a preferred embodiment, the calibration time interval is equal to a mean operation time interval determined based on the probability density function of the operation time interval after which devices of the same type will require adjustment or replacement, in case the criticality of the specific device is lower than a predetermined criticality limit.

The invention further comprises a method of operating a specific measurement device of a given type in a specific application and calibrating it after a calibration time determined according to the invention.

According to a refinement of the last mentioned method, the specific device is installed and operated in the specific application for an initial test period during which proper operation of the device is tested and operated in the specific application for the duration of the calibration interval only if its proper operation was confirmed during the test period.

According to an embodiment of the last mentioned refinement, the specific device is a new device and/or a device having a high criticality.

The invention and further advantages are explained in more detail using the figure of the drawing.

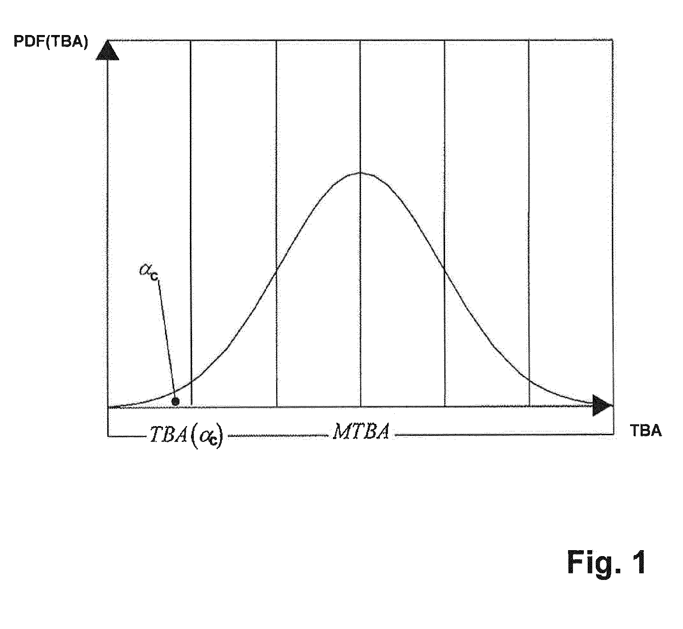

Fig. 1 shows:    a probability density function for a time interval between consecutive adjustments of measurement devices of a given type.

The invention provides a method of determining a calibration time interval for a specific measurement device of a given type to be used in a specific application.

The specific measurement device can be any type of measurement device available on the market, like for example a level measurement device for measuring a level of a product in a container, a flow meter for measuring a flow of a product through a pipe, a temperature measurement device or a pressure measurement device. The specific application is generally defined by a measurement task assigned to the device, a measurement site on which the measurement task will performed, and an environment, incl. for example an entire industrial plant, the measurement site is embedded in. Typically measurement devices are applied on measurement sites, e.g. in pipes or on containers, embedded in an industrial sites, e.g. in a laboratory, on a production plant, a refinery or a steel furnace, for measuring quantities, required e.g. for running, monitoring and/or controlling an ongoing process on the industrial site.

According to the invention, a statistically relevant number of devices of the given type is operated and regularly calibrated. To this extent, calibrations of these devices can e.g. be performed periodically after fixed calibration time intervals, e.g. calibration time intervals recommended by the manufacturer of the given type of device.

In the most general case, devices of the same type comprise all devices of the same built. Preferably, the type of device is defined more specifically.

To this extent devices of the same type can be limited to all devices of the same built belonging to a predefined age group, in particular new devices, medium age device or old devices. The age groups are predefined taking into account the expected life time of devices of this built. For devices with long life times, e.g. of up to thirty years, more age groups can be defined, e.g. age groups covering a range of e.g. five years each.

As an alternative, or in addition to this, the devices of the same type can be limited to devices of the same built operated under exposure to predefined environment conditions prevailing at the specific application the specific device shall be used in. The exposure to the predefined environment condition is for example an exposure to high and/or varying temperatures, an exposure to high and/or varying pressures, an exposure to aggressive and/or abrasive media, and/or an exposure to vibrations.

During each calibration of each of these devices of the same type it is determined whether the device under calibration is compliant or non-compliant to a given specification. The given specification is for example a measurement accuracy specified for the type of device. Compliance can for example be determined, by having the device perform at least one measurement task according to a given operating procedure, during which at least one given value of the quantity to be measured by the device is provided by a corresponding reference or standard. Based on the measurement indications obtained by the device under calibration with respect to the given value of the quantity to be measured, a measurement error of the device is determined. In case the measurement error does not exceed a maximum permissible error given by the specification compliance of the device under calibration is declared and the device is put back into operation for the duration of another calibration time interval, after which it is calibrated again.

In case the measurement error exceeds the predetermined maximum permissible error, the device under calibration is considered non-compliant. As a consequence, adjustment of the measurement device is required, which can be performed based on the data obtained during the calibration procedure. This includes for example adjustments of offset, gain and/or span of the measurement indication. The adjusted device is re-calibrated. If the adjustment was successful, compliance of the device will be determined during the re-calibration. In this case, the device is put back into operation for the duration of another calibration time interval, after which it is calibrated again. In case the device is still non-compliant after adjustment it needs to be replaced.

This step is performed over a time range, which is long compared to the fixed calibration time interval.

During this time range, all operation time intervals $TBA_i$ during which any one of these devices was operated unalteredly - without any changes or modifications to it - prior to any of its adjustments or its replacement are recorded for each of the devices of the same type.

Depending on the given type of device, the operation time intervals $TBA_i$ will comprise initial time intervals for which new devices were operated until they required their first adjustment or needed to be replaced, time intervals occurring between two consecutive adjustments of the same device, and/or time intervals during which devices were operated unalteredly without requiring adjustment until they needed to be replaced. In addition, in case a device did not require adjustment during the entire time range, the time range can be recorded as an operation time interval of this device.

Based on these operation time intervals $TBA_i$ a probability density function PDF(TBA) for an operation time interval TBA after which devices of this type will require adjustment or replacement is determined. It represents the probability of occurrence of operation time intervals of a certain length over the entire time range, which is given by the frequency of recorded operation time intervals of the respective length in relation to the total number of devices of recorded operation time intervals. An example is shown in Fig. 1.

This probability density function PDF(TBA) forms the basis for the determination of a suitable calibration time interval for a specific device of this type in a specific application.

In a next step, a criticality C of the specific device is determined. The criticality represents a risk involved in operating this specific device in the specific application. Criticality assessment is a known method used in industry, for identifying devices forming the greatest risk to the overall performance of the process. Criticality of a device is typically determined based on a product of a probability of a defect of the respective device and a severity of the consequences of this defect. The probability of a defect of the device is preferably determined based on device specific properties as well as on application specific properties. The device specific properties preferably include an expected life time of the device, its operating hours and/or its statistical failure rate. The application specific properties of the device preferably include environment conditions prevailing at the measurement site, like for example an exposure of the measurement device to harsh conditions such as high or varying temperatures and/or pressures, aggressive and/or abrasive media and/or vibrations. The severity of the consequences of the defect of the device is preferably determined based on information pertinent to the measurement site and the environment, e.g. the industrial site, the measurement site is embedded in. This information is for example retrieved by a thorough analysis of the industrial (production) process performed on the industrial site in which preferably all potential consequences of the defect of the device are taken into account. The consequences of the defect include for example safety hazards a defect would cause to people, to the surrounding and/or to the measurement site and the industrial site it is embedded in, consequences regarding the quality, quantity and the availability of end -, intermediate - or by - products produced by the industrial process, as well as consequences regarding the operating costs involved in running the industrial process.

Finally, the calibration time interval TI for the specific device of the given type is determined based on its criticality C and the previously determined probability density function PDF(TBA) for the operation time intervals TBA after which devices of this type will require adjustment or replacement.

According to the invention, the calibration time interval TI is determined as a time interval $TBA(\alpha_c)$ for which a probability P for devices of this type to require adjustment or replacement during this time interval $TBA(\alpha_c)$ is equal to a predetermined probability value $P(\alpha_c)$ assigned to the criticality C determined for the specific device in the specific application.

A low probability value $P(\alpha_c)$, e.g. of 1%, corresponds to a situation, wherein statistically a correspondingly high percentage of devices of this type, 99% in this example, will still be in full compliance after the end of the corresponding calibration time interval TBA($\alpha$). Correspondingly, probabilities values P($\alpha_c$) assigned to higher criticalities C are smaller than probability values P($\alpha_c$) assigned to lower criticalities C. In addition, all assigned probabilities values P($\alpha_c$) are preferably smaller than a given probability limit P$_{max}$, preferably smaller than 50%. A probability of 50% corresponds to a calibration time interval TI$_{50\%}$ equal to a mean operation time interval MTBA of a device of the given type, given by:

$$TI_{50\%} = MTBA = \int_0^\infty TBA \cdot PDF(TBA) d(TBA)$$

Probability values P($\alpha_c$) can for example be defined to continuously decrease over the entire possible range of criticalities C as the criticalities increase. Alternatively, a fixed number of predefined probability values P($\alpha_{CRi}$) can be assigned to a corresponding number of criticality ranges CR$_i$. And last but not least, the two alternatives can be combined. This can be done by defining a first criticality range CR$_{low}$, comprising all criticalities C lower than a predetermined criticality limit, and a second criticality range CR$_{high}$, comprising all criticalities exceeding the criticality limit. In this case a single probability value P$_{low}$ can be assigned to all criticalities C within the first criticality range CR$_{low}$ and a range of probabilities values P($\alpha_{Chigh}$) can be assigned to the criticalities contained in the second criticality range CR$_{high}$. Again these probabilities values P($\alpha_{Chigh}$) will be defined to continuously decrease as the criticalities C of the second criticality range CR$_{high}$ increase. It is thus possible to summarize all negligible criticalities C in the first criticality range CR$_{low}$ and to assign them the highest probability P given by the probability limit P$_{max}$.

Given the probability value P($\alpha_c$) assigned to the criticality C of the specific device the corresponding time interval TBA($\alpha_c$) is determined based on the probability density function PDF(TBA) for the type of device.

The probability P($\alpha_c$) for a device of this type to require adjustment during the time interval TBA($\alpha_c$) is given by a cumulated density function CDF(TBA($\alpha_c$)) of the probability density function PDF(TBA) given by an integral over the probability density function PDF(TBA) over the corresponding time interval range [0, TBA($\alpha_c$)]:

$$P(\alpha_C) = CDF(TBA(\alpha_C)) = \int_0^{TBA(\alpha_C)} PDF(TBA) d(TBA)$$

Thus the required time interval TBA($\alpha_c$) for a given probability P($\alpha_c$) is given by the inverse of the cumulated density function CDF(TBA($\alpha_c$)) at the given probability P($\alpha_c$).

The probability density function PDF(TBA) gives a profound, comprehensible and documented basis for determining the calibration time interval. Since it is based on a statistically representative number of devices of the respective type, it accurately represents the probabilities of an adjustment or replacement requirement during the determined calibration time TI. By taken into account the risk involved in operating the specific device given by its criticality C via the assigned probability values P($\alpha_c$), the method allows for determination of the most suitable calibration time interval with respect to safety as well as with respect to the time, effort and cost involved in calibrating the device.

In addition to the determination of the calibration time interval TI for the specific measurement device, the invention also comprises a method of operating the specific measurement device of the given type in the specific application and calibrating it after it has been in operation for the duration of the calibration time interval TI determined as described above.

Since the calibration time interval TI is determined based on operation time intervals TBA$_i$ of a representative number of devices of the same given type, as well as on the criticality C of the specific device, it not only takes into account the statistical probability of the specific device to require adjustment and/or replacement after it has been put into operation, but also optimizes the calibration time interval TI in view of the risk involved in operating the specific device.

What is not taken into account however, is a possibility of a faulty installation or taking into operation of a new specific device or an older specific device after its calibration. Obviously, this problem is especially relevant with respect to new devices which are installed for the first time, and is even more severe, when this specific device has a high criticality C.

This problem can be overcame by operating the specific device in the specific application for an initial test period during which proper operation of the device is tested. Operation of the device can for example be tested by performing reference measurements with another measurement device or by other means of verifying the measurement results obtained by the specific device during the test period. In case the specific device does not pass this test, the underlying problem is recognized and can usually be overcome. In case proper operation of the specific device was confirmed during the test period, the user can be certain, that it was properly installed and taken into operation. In this case, the specific device will be operated in the specific application for the duration of the calibration interval TI determined as described above.

**Claims**

1. Method of determining a calibration time interval (TI) for a specific measurement device of a given type to be used in a specific application, after which the specific device shall be calibrated, comprising the steps of:

   - operating and regularly calibrating a statistically relevant number of devices of the given type,
   - during each calibration of each of theses devices determining whether the device under calibration is compliant or non-compliant to a given specification,
   - adjusting non-compliant devices in order to make them compliant again, and replacing them in case they are non-compliant after their adjustment,
   - for each of these devices recording all operation time intervals ($TBA_i$) during which the respective device was operated unaltered prior to any of its adjustments or its replacement,
   - based on the recorded operation time intervals ($TBA_i$) determining a probability density function (PDF(TBA)) for an operation time interval (TBA) after which devices of this type will require adjustment or replacement,
   - determining a criticality (C) of the specific device representing a risk involved in operating the specific device in the specific application, and
   - determining the calibration time interval (TI) as a time interval ($TBA(\alpha_c)$) for which according to the probability density function (PDF(TBA)) a probability (P) for a device of this type to require adjustment or replacement during this time interval ($TBA(\alpha_c)$) corresponds to a predetermined probability value ($P(a_c)$) assigned to the criticality (C) of the specific device.

2. Method according to claim 1, wherein the devices of the same type are devices of the same built belonging to a predefined age group, in particular new devices, medium age devices or old devices.

3. Method according to claim 1 or 2, wherein the devices of the same type are devices of the same built operated under exposure to predefined environment conditions prevailing at the specific application, in particular under exposure to high and/or varying temperatures, under exposure to high and/or varying pressures, under exposure to aggressive and/or abrasive media, and/or under exposure to vibrations.

4. Method according to claim 1, wherein the probability values ($P(\alpha_c)$) assigned to the criticalities (C) decrease with increasing criticality (C).

5. Method according to claim 1 or 4, wherein a fixed number of predefined probability values ($P(\alpha_c)$) is assigned to a corresponding number of criticality ranges ($CR_i$).

6. Method according to claim 1, wherein all probability values $P(\alpha_c)$ assigned to the criticalities (C) are smaller than or equal to a given probability limit ($P_{max}$), in particular smaller or equal to 50%.

7. Method according to claim 6, wherein all probability values $P(\alpha_c)$ assigned to criticalities (C) smaller than a predetermined criticality limit are equal to the probability limit (Pmax).

8. Method according to claim 1, wherein

   - a first criticality range ($CR_{low}$) is defined comprising all criticalities (C) lower than a predetermined criticality limit, and
   - a second criticality range ($CR_{high}$) is defined comprising all criticalities (C) exceeding the criticality limit,
   - a single probability value ($P_{low}$) is assigned to all criticalities (C) within the first criticality range ($CR_{low}$), and
   - a range of probability values ($P(\alpha_{Chigh})$) is assigned to the criticalities (C) contained in the second criticality range ($CR_{high}$), which decrease with increasing criticality (C).

9. Method according to claim 1, wherein the calibration time interval (TI) is equal to a mean operation time interval (MTBA) determined based on the probability density function (PDF(TBA)) of the operation time interval (TBA) after which devices of the same type will require adjustment or replacement, in case the criticality (C) of the specific device is lower than a predetermined criticality limit.

10. Method of operating a specific measurement device of a given type in a specific application and calibrating it after a calibration time (TI) determined according to one of the previous claims.

11. Method according to claim 10, wherein the specific device is installed and operated in the specific application for an initial test period during which proper operation of the device is tested and operated in the specific application for the duration of the calibration interval (TI) only if its proper operation was confirmed during the test period.

12. Method according to claim 11, wherein the specific device is a new device and/or a device having a high criticality (C).

**Fig. 1**

**EP 2 597 436 A1**

<table>
<tr><td colspan="2">Europäisches Patentamt<br>European Patent Office<br>Office européen des brevets</td><td>**EUROPEAN SEARCH REPORT**</td><td>Application Number<br>EP 11 19 0393</td></tr>
</table>

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| X | "Measuring and Test Equipment Specifications", NASA Handbook , 13 July 2010 (2010-07-13), XP55027805, Washington DC 20546 Retrieved from the Internet: URL:http://www.hq.nasa.gov/office/codeq/doctree/NHBK873919-2.pdf [retrieved on 2012-05-22] * Section 10.2.8 Calibration Intervals; pages 87, 88 * ----- | 1-12 | INV.<br>G01F25/00<br>G01D18/00<br>G01L27/00<br>G01K15/00 |
| | | | **TECHNICAL FIELDS SEARCHED (IPC)**<br>G01F<br>G01D<br>G01L<br>G01K |

The present search report has been drawn up for all claims

| Place of search | Date of completion of the search | Examiner |
|---|---|---|
| Munich | 23 May 2012 | Politsch, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9